# FASCICULE DE BREVET EUROPEEN

(11) **EP 2 763 937 B1**
(45) Date de publication et mention de la délivrance du brevet: **31.01.2018**
(21) Numéro de dépôt: 12775797.9
(22) Date de dépôt: 01.10.2012
(51) Int. Cl.: B01D 3/10, C01B 7/07, C01B 7/19, C01B 7/01, C01B 35/06

(54) **PROCEDE DE VALORISATION DES EFFLUENTS D'ACIDE CHLOROFLUORHYDRIQUE**
VERFAHREN ZUM RECYCLING VON SALZSAURE- UND FLUSSSÄURE-EFFLUENZEN
METHOD OF RECYCLING HYDROCHLORIC AND HYDROFLUORIC ACID EFFLUENT

(30) Priorité: 06.10.2011 FR 1159026
(43) Date de publication de la demande: 13.08.2014
(73) Titulaire: ARKEMA FRANCE, 92705 Colombes Cedex (FR)
(72) Inventeur: DUFOUR, Pascal, 69300 Caluire Et Cuire (FR); LE TOULLEC, Cyrille, 69100 Villeurbanne (FR)
(74) Mandataire: Chahine, Audrey Claire
(86) Numéro de dépôt international: PCT/FR2012/052214
(87) Numéro de publication internationale: WO 2013/050690

(56) Documents cités:
- EP-A1- 0 425 922
- EP-A1- 0 582 914
- FR-A1- 2 195 588
- FR-A1- 2 370 685
- GB-A- 985 769
- US-A- 3 353 911
- DATABASE WPI Week 200862 Thomson Scientific, London, GB; AN 2008-K33528 XP002676945, & JP 2008 189483 A (CRITEK SERVICE KK) 21 août 2008 (2008-08-21)

## Description

La présente invention concerne un procédé de valorisation des mélanges d'acide chlorhydrique et fluorhydrique. Elle a plus particulièrement pour objet un procédé de valorisation de l'acide fluorhydrique. Elle a en outre pour objet un procédé de fabrication du trifluorure de bore gazeux.

Les chlorofluorohydrocarbones (par exemple le chlorodifluorométhane), les hydrofluorocarbones (par exemple le tetrafluoroéthane) ou les hydrofluorooléfines (par exemple le tetrafluoropropène) sont en général obtenus en faisant réagir un hydrocarbure chloré avec de l'acide fluorhydrique en phase liquide ou gaz en présence d'un catalyseur. L'acide fluorhydrique est en général utilisé en quantité surstoechiométrique dans cette réaction. Outre le composé fluoré recherché, il se forme de l'acide chlorhydrique qui en présence de l'acide fluorhydrique pose un problème de séparation.

La récupération de l'acide chlorhydrique et de l'acide fluorhydrique dans la réaction précitée n'est pas aisée. Les méthodes de séparation classique, par exemple la distillation, ne permettent pas d'obtenir de l'acide fluorhydrique de pureté suffisante. A noter que des quantités résiduelles de chlorures, supérieures à 50 mg/dm³, dans l'acide fluorhydrique sont néfastes dans certaines applications telles que le décapage des tôles d'acier.

Pour améliorer la séparation de l'acide chlorhydrique de l'acide fluorhydrique et des fluorures solubles, le document US 2343462 propose de distiller une solution aqueuse contenant de l'acide chlorhydrique et de l'acide fluorhydrique ou des fluorures solubles en présence de l'acide borique ou d'un borate soluble. Les exemples illustrent la purification de l'acide chlorhydrique contaminé avec de l'acide fluorhydrique ou des fluorures à l'aide de l'acide borique. Toutefois, cette méthode de séparation génère des mélanges fluoroborés contaminés avec du chlorure et donc difficilement valorisables. La demande de brevet européen EP 0 425 922 A1 décrit un procédé de valorisation d'acide chlorofluorhydrique par séparation de l'acide fluorhydrique en le faisant réagir avec de l'acide borique (H₃BO₃) pour former un mélange d'acide fluoborique hydraté (HBF₄,zH₂O) et d'acide chlorhydrique. Ce mélange est ensuite soumis à deux étapes de distillation afin d'obtenir de l'acide chlorhydrique et une solution concentrée d'hydrate de trifluorure de bore.

On entend par mélange fluoborés, les solutions diluées d'hydrates de trifluorure de bore composés de mélanges de BF₃,2H₂O, d'acide borique H₃BO₃ et d'acides fluoboriques hydratés HBF₄, z H₂O tels qu'expliqués dans les publications scientifiques de Christian A. WAMSER, J. Amer. Chem. Soc. Volume 73 page 409 à 413 de 1951 et du complément Von Stephan Pawlenko, Zeitschrift für anorganische und allgermeine Chemie, Band 300 ; 1959. z n'étant pas un chiffre déterminé avec précision.

On entend par acide chlorofluorhydrique, un mélange d'HF, d'HCl et d'H₂O, éventuellement avec de très faibles quantités de chlorure métallique.

Par ailleurs, le trifluorure de bore (BF₃) est un gaz qui est principalement utilisé dans l'industrie comme catalyseur dans un grand nombre de réactions : polymérisation, estérification, alkylation, isomérisation, Le trifluorure de bore gazeux et anhydre est généralement obtenu par réaction de l'acide fluorhydrique anhydre liquide avec l'acide borique dissout dans l'acide sulfurique et par ajout complémentaire d'oléum. Le trifluorure de bore gazeux est aussi obtenu par traitement à l'acide sulfurique ou sulfurique en mélange avec de l'oléum d'une solution aqueuse concentrée d'hydrate de BF₃. Cependant, la présence d'impureté, telle que le chlorure d'hydrogène (du fait de la génération d'HCl gaz en même temps que du BF₃ gaz), dans la solution aqueuse concentrée d'hydrate de BF₃ pose problème lors du traitement à l'acide sulfurique. En effet, la séparation du BF₃ gazeux et de l'HCl gazeux est non seulement très difficile mais également très coûteuse.

La présente invention a pour premier objet un procédé de valorisation d'acide chlorofluorhydrique ne présentant pas les inconvénients de l'art antérieur. La présente invention fournit non seulement un procédé de valorisation d'effluent comprenant de l'acide chlorofluorhydrique mais surtout celui de valoriser de l'acide fluorhydrique, sous forme de fluorure de bore.

La présente invention a pour deuxième objet un procédé de valorisation des mélanges de fluoborés contaminés par des chlorures.

Le procédé, selon la présente invention, comprend (i) au moins une étape au cours de laquelle au moins un composé au bore choisi parmi l'acide borique (H₃BO₃), le métaborique (HBO₂) ou l'anhydride (B₂O₃) est mis en contact avec une solution aqueuse d'acide chlorofluorhydrique pour donner un mélange fluoborés et de l'acide chlorhydrique ; (ii) une étape de distillation pour donner d'une part de l'acide chlorhydrique et d'autre part un mélange comprenant de l'eau, de l'acide chlorhydrique résiduel et un mélange de fluoborés et (iii) une étape de distillation sous vide du mélange obtenu à l'étape (ii) mise en oeuvre à une pression absolue comprise entre 10 et 100 mbar pour éliminer l'acide chlorhydrique résiduel et l'eau et pour ainsi donner une solution aqueuse concentrée d'hydrates de trifluorure de bore, contenant moins de 100 mg de chlorure par kg d'hydrates de BF₃. La solution aqueuse d'acide chlorofluorhydrique à valoriser peut provenir d'une unité de fabrication mettant en jeu au moins une réaction d'hydrofluoration des composés organiques chlorés, notamment les unités de fabrication des chlorofluorohydrocarbones, des hydrofluorocarbones ou les hydrofluorooléfines.

La solution aqueuse à valoriser comprend de préférence de 0,005 % à 38 % en poids d'acide chlorhydrique, de 1 à 65 % en poids d'acide fluorhydrique, l'eau étant le complément à 100% de l'addition des pourcentages en HCl et HF.

Avantageusement, la solution aqueuse à valoriser comprend de préférence de 0,005 à 21% en poids d'acide chlorhydrique, de 1 à 41 % en poids d'acide fluorhydrique, l'eau étant le complément à 100% de l'addition des pourcentages en HCl et HF.

Cette solution aqueuse peut comprendre en outre des composés organiques légers volatils tels que le chloroforme, le dichlorofluorométhane, le chlorodifluorométhane, le tetrafluoroethane, l'acide trifluoroacétique.

Les étapes (i) et (ii) peuvent être simultanées ou consécutives.

Le rapport molaire HF/composé de bore exprimé par le ratio en mole de l'élément F par mole de l'élément B dans l'étape (i) du procédé selon la présente invention peut être compris entre 1 et 4 de préférence compris entre 2,5 et 3.

Un ratio F/B compris entre 3 et 4 de solutions concentrées d'hydrate de BF₃ peut être assimilé à un mélange de BF₃,x H₂O et de HBF₄,z H₂O, avec x variant de 2 à 4 et z variant de 3 à 6.

La température de mise en oeuvre de l'étape (i) est de préférence comprise entre 0°C et 120°C, celle de l'étape (ii) est de préférence comprise entre 25°C et 120°C, avantageusement comprise entre 40°C et 110°C.

Les étapes (i) et (ii) du procédé selon la présente invention sont de préférence mises en oeuvre à pression atmosphérique.

Selon un mode préféré de l'invention, l'étape (iii) est mise en oeuvre dans les conditions telles que le mélange fluoborés contient de préférence entre 100 mg et 330 g de chlorure par Kg de mélange fluoborés , avantageusement entre 100 mg et 210 g de chlorure par Kg de mélange fluoborés.

La température à laquelle l'étape (iii) est mise en oeuvre est de préférence comprise entre 30°C et 90°C, avantageusement entre 60°C et 90°C.

L'étape (iii) du procédé selon la présente invention est mise en oeuvre à une pression absolue comprise entre 10 et 100 mbar de sorte que l'hydrate de trifluorure de bore après concentration et purification en fin de l'étape (iii) contienne moins de 100 mg de chlorure par kg d'hydrates de BF₃.

La présente invention a pour deuxième objet un procédé de valorisation des mélanges de fluoborés, contaminés par des chlorures, en solution aqueuse d'hydrates de fluorure de bore comprenant une étape de distillation sous vide.

Les conditions préférées de l'étape de distillation sous vide sont les mêmes que celles pour l'étape (iii) du procédé selon le premier objet.

La présente invention a pour troisième objet un procédé de fabrication du trifluorure gazeux comprenant (i) au moins une étape au cours de laquelle au moins un composé au bore choisi parmi l'acide borique (H₃BO₃), le métaborique (HBO₂), l'anhydride B₂O₃ est mis en contact avec une solution aqueuse d'acide chlorhydrique et d'acide fluorhydrique pour donner une mélange fluoborés et de l'acide chlorhydrique ; (ii) une étape de distillation pour donner d'une part de l'acide chlorhydrique et d'autre part un mélange comprenant de l'eau, de l'acide chlorhydrique résiduel et un mélange fluoborés; (iii) une étape de distillation sous vide du mélange obtenu à l'étape (ii) pour éliminer l'acide chlorhydrique résiduel et l'eau et ainsi donner une solution aqueuse d'hydrate de trifluorure de bore et (iv) une étape au cours de laquelle la solution concentrée aqueuse d'hydrate de trifluorure de bore est soumise à un traitement avec de l'acide sulfurique concentré ou d'anhydride sulfurique ou avec de l'oléum (solution d'anhydride sulfurique dans de l'acide sulfurique) pour donner du trifluorure de bore gazeux.

La température de traitement de l'étape (iv) est de préférence comprise entre 75 et 135°C et avantageusement entre 100 et 115°C.

Le procédé selon la présente invention peut être mis en oeuvre en discontinu (batch) ou semi-continu ou en continu.

Un procédé discontinu consiste à charger le réacteur avec de l'acide chlorofluorhydrique puis à introduire l'acide borique ou l'inverse pour une durée donnée en assurant un refroidissement pour tenir compte de l'exothermicité de la réaction et avec un dégagement partiel de l'HCl dépendant de la température. En procédé discontinu, l'étape (iii) peut être mise en oeuvre dans le même réacteur que les étapes précédentes et l'HCl et de l'eau sont éliminés en diminuant la pression et en augmentant au fur et à mesure la température jusqu'à l'obtention d'un hydrate de BF₃ concentré. La concentration en chlorure diminue progressivement au fur et à mesure de l'avancement de l'étape (iii) jusqu'à atteindre en fin de l'étape (iii) moins de 100 mg de chlorure par kg d'hydrate de BF₃. Ensuite de l'acide sulfurique est ajouté, puis progressivement de l'oléum jusqu'à dégager tout le gaz BF₃ à la phase gaz. L'acide sulfurique formé dans le réacteur est vidangé.

Dans un procédé semi-continu, une partie seulement, notamment l'étape (iii), est en continu.

En procédé continu, toutes les opérations peuvent être continues. Par exemple, le mélange fluoborés peut être fabriqué dans un premier réacteur par alimentation de l'acide chlorofluorhydrique de façon concomitante à l'acide borique à pression atmosphérique et température maintenue par refroidissement pour les étapes (i) et (ii). Dans un second réacteur, l'hydrate de BF₃ est maintenu à un niveau presque constant par alimentation du mélange fluoborés avec son acide chlorhydrique en provenance du premier réacteur et soutirage d'hydrate de fluorure de bore en pied de réacteur. Sous pression réduite et sous température modérée l'eau et l'HCl sont simultanément retirés dans la phase gaz. Au démarrage, le second réacteur est chargé d'hydrate de BF₃,x H₂O en provenance, par exemple d'un procédé discontinu. L'hydrate de BF₃ soutiré en pied du second réacteur et un flux d'oléum et d'acide sulfurique peuvent alimenter un troisième réacteur pour générer du gaz anhydre BF₃.

La température de mise en oeuvre de l'étape (iii) en procédé continu est avantageusement comprise entre 60 et 80°C de sorte que l'hydrate de trifluorure de bore pendant toute la concentration et la purification contient en permanence moins de 100 mg de chlorure par kg d'hydrates de BF₃. L'hydrate de BF3 soutiré du pied de réacteur contient moins de 100 mg de chlorure par kg.

### PARTIE EXPERIMENTALE

Pour caractériser des hydrates de BF₃ concentrés obtenus avec le procédé de l'invention, un certain nombre de techniques analytiques ont été utilisées.

La densité est une mesure faite par tout type de densimètre en réalisant des étalons de BF₃ dissout dans l'eau entre 50 et 70 % en BF₃ et en corrélant proportionnellement la valeur de densité à la concentration massique en pourcentage de BF₃.

Le dosage des chlorures dans les hydrates de BF₃ est réalisé en introduisant une solution de nitrate d'argent de concentration connue (Molaire/100) pour faire précipiter le chlorure d'argent. Une électrode potentiométrique détecte le point équivalent correspondant à la transformation de tous les chlorures par le cation argent Ag⁺. Pour améliorer la sensibilité, des quantités de chlorures connues sont ajoutées dans l'échantillon d'hydrate de BF₃, lorsque la quantité de chlorures est trop faible pour être détectée. Par cette méthode, la limite de détection des chlorures est 10 mg/dm³. C'est une méthode spécifique du chlorure. Un étalon contenant la concentration connue de l'élément Cl à 25 mg/dm³ dans un BF₃ hydrate étalon est mesurable par cette méthode et est confirmé par une autre méthode spécifique en fluorescence par rayon-X (FX) sans pratiquer de dilution de l'échantillon.

Le dosage du bore d'hydrate de BF₃ peut être effectué par ICP, c'est-à-dire par « inductive coupled plasma » optique. C'est une technique qui remplace l'absorption atomique utilisant une torche à Plasma qui ionise l'élément bore avec émission de lumière à 249,773 nanomètres fonction de la concentration en bore. Une gamme étalon de dilution de différentes concentrations d'acide borique ajusté à l'acide acétique à pH entre 4 et 5 sert de droite de calibration. L'intensité lumineuse est reportée sur cette courbe de calibration pour trouver la concentration en bore. C'est une méthode absolue sans interférence possible.

Pour doser le fluor et le bore, il existe une méthode volumétrique indirecte qui n'est utilisable qu'après s'être assuré que l'échantillon du pied ne contient pas de chlorure c'est-à-dire pas de HCl ou en quantités inférieures à 100 mg/kg d'hydrate de BF₃. Si l'échantillon contient de l'HCl, il faudra les soustraire de cette méthode indirecte. La méthode volumétrique est celle de l'article de « Christian A. WAMSER, J. Amer. Chem. Soc. Volume 73 pages 411-412 (an 1951) figure 4 » et sommairement décrite ci-dessous.
Elle consiste à décomplexer le fluor du BF₃ hydrate concentré en introduisant 200 microlitres (microdm³) dans 130 cm³ de solution de CaCl₂ à 4% massique puis en faisant réagir à chaud à ébullition et reflux pendant 30 minutes. Il est généré pour chaque mole de fluor une mole de HCl dosable après refroidissement par NaOH par un saut de pH selon :

2 BF₃,yH₂O + 3 CaCl₂ + 6 H₂O --------------------→ 2 H₃BO₃ + 3 CaF₂ + 6 HCl + 2y H₂O

L'acide chlorhydrique généré est dosé à la soude et le point équivalent est mesuré sur la courbe typique de la figure 4 de l'article de WAMSER en dessous de pH 7 selon :

HCl + NaOH-→ NaCl + H₂O d'où % en F calculable avec chaque mole de HCl= mole F

En poursuivant le dosage pour un second saut de pH au dessus de 7 pour mesurer le point équivalent de la première acidité de l'acide borique par une base on accède à la teneur en B, voir aussi cette figure 4 :

H₃BO₃ + NaOH---→ B(OH)₄ Na

d'où % en B calculable avec chaque mole de NaOH=mole de B

Cette méthode a été vérifiée sur une gamme étalon de ratio molaire F/B variant de 2,5 à 4. Cette gamme étalon est fabriquée par ajout d'HF dosé sur de l'acide borique préalablement dosé. Il n'est pas utilisé d'indicateur coloré methylorange ou phénolphtaléine pour le point équivalent mais par lecture directe du graphique pH=fonction du volume de soude titrée.

### Exemple 1 :

Le mélange à séparer provient d'une unité de fabrication de fluorohydrocarbones avec la composition suivante :
17,3 % en poids de HCl
21,8 % en poids d'HF
60,7 % en poids d'eau
Chlorodifluorométhane, CHF₂Cl: 2200 mg/dm³
Chloroforme < 5mg/l

On introduit pendant 5 heures, à l'aide d'une pompe péristaltique, 1070 g du mélange dans un réacteur - évaporateur à double enveloppe maintenu à 35°C, muni d'un tube plongeur et contenant préalablement 113,5 g d'eau, 186,5 g d'acide chlorhydrique à 37 % massique et 240,7 g d'acide borique pureté 99,99%. La présence d'HCl dans le réacteur avant ajout permet de conserver la concentration en HCl de la solution chlorofluorhydrique. La quantité en acide chlorhydrique à éliminer est ainsi très élevée. On observe un éclaircissement de la suspension et une limpidité du liquide peu avant la fin de l'introduction d'acide chlorofluorhydrique.

Le réacteur est ensuite refroidi à 26°C puis mis sous vide vers pression 30mbar absolue avec mise en fonctionnement d'un réfrigérant sur recette distillat régulé à 1°C. La température initiale en pied sous ce vide est de 26°C, puis elle est montée progressivement par chauffage en 178 minutes pour atteindre la valeur de 72°C sous 30 mbar. La pression atmosphérique est rétablie à l'azote après arrêt de la pompe à vide.

Une quantité de distillat de 1086 g est obtenue avec une densité de 1,130 à 20°C, en accord avec celle d'un acide chlorhydrique à 20,2% massique de densité 1,100. Dans le piège à carboglace, on y trouve 109 g de liquide de même densité.

Le pied de cuve contient 407 g d'hydrates de BF₃ concentré ayant les caractéristiques suivantes :
Densité 1,572 à 28°C permettant d'estimer un titre de 60,7% en BF₃ si le ratio molaire F/B=3,00
Le bore et le fluor sont dosés par volumétrie
% masse en F = 50,6 %
% masse en B = 9,6%
% BF₃ en masse avec B+F = 60,2 %
Eau en % = 100 - (B+F)% = 39,8 % calculé par différence
H₂O /B calculé = 2,5
Ratio molaire F/B calculé = 3,0
Analyse des chlorures, inférieure à 10 mg par dm³
Carbone organique total : inférieur à 10 mg/dm³

### Exemple 2

De l'acide chlorofluorhydrique, provenant d'une distillation d'un mélange d'acides issu d'une unité de fabrication de chlorofluorocarbones, a la composition suivante :
28,7 % en poids d'HF
0,57 % en poids d'HCl
70,5 % en poids d'eau
Chlorodifluorométhane, CHF₂Cl : 1800 mg/dm³

800 g de cet acide chlorofluorhydrique impur sont introduits dans un réacteur en verre double enveloppe avec une pompe péristaltique équipée de tuyau plastique. Le réacteur en verre contient préalablement une suspension constituée de 236,5 g d'acide borique H₃BO₃ de pureté 99,99% dans 300 g d'eau déminéralisée. La température monte progressivement de 19 vers 33°C. En fin d'introduction de l'acide chlorofluorhydrique, on a une solution sans acide borique en suspension. Tout a été dissout par réaction. En effet, avec une teneur en BF₃ voisine de 20% conformément au tableau de Christian A. WAMSER, J. Amer. Chem. Soc. Volume 73 page 409 à 413 de 1951 et du complément Von Stephan Pawlenko, Zeitschrift für anorganische und allgermeine Chemie, Band 300 ; 1959, la teneur en H₃BO₃ insoluble est nulle.

L'eau est évaporée progressivement en descendant la pression vers 50 mbar absolue et en montant la température vers 39°C pour obtenir les premières gouttes d'eau distillée. Les vapeurs sont refroidies par un condenseur en verre alimenté avec un fluide réfrigéré vers 0,5°C formant un distillat récupéré dans une ampoule graduée. Lorsque le niveau de distillat récupéré atteint les graduations 640 cm³ en 90 minutes, des chlorures sous forme HCl commencent à s'éliminer. La fin de distillation des chlorures se manifeste lorsque le volume atteint 710 cm³ au bout de 125 minutes compté depuis le début de l'évaporation sous pression réduite. A ce stade, la pression absolue est toujours constante à 50 mbar, mais la température atteint 64°C. La distillation de l'eau est poursuivie vers 175 minutes jusqu'à l'obtention de 891 cm³ de distillat sous 50 mbar à 86°C.

Le pied de distillation est refroidi puis remis à pression atmosphérique pour évaluation physico-chimique des hydrates de BF₃.
Densité 1,567 à 21°C permettant d'estimer un titre de 59,9% en BF₃ si le ratio F/B=3,00 Le bore est dosé par méthode volumétrique ou par spectroscopie plasma ICP.
Le fluor est dosé par volumétrie
Dans ses conditions, l'analyse donne le résultat suivant :
% masse en F = 49,7 %
% masse en B = 9,4 % confirmé par méthode ICP
% BF₃ en masse avec B+F = 59,1%
Eau en % = 40,9%
Ratio H₂O /B = 2,6
Ratio molaire F/B = 3,0 Analyse des chlorures, teneur inférieure à 10 mg par dm³ de liquide en pied de distillation dosé par méthode potentiométrique au nitrate d'argent Matières organiques calculées en carbone organique total COT est inférieur à 10 mg/ dm³ indiquant la disparition de CHF₂Cl, CHFCl₂, CCl₃H.

Cet hydrate de BF₃ est ensuite transformé en BF₃ gaz par un traitement à l'oléum en mélange avec de l'acide sulfurique.

Les mêmes essais réalisés avec une pression constante différente et une température finale en relation avec le pied de distillation et la pression montrent une évolution du ratio final H₂O/B selon :

| Pression absolue constante en mbar durant l'essai | température finale en °C | Ratio molaire x H₂O/BF₃ final de l'hydrate de BF3,xH2O | Cl en mg/dm³ |
|---|---|---|---|
| 100 | 88 | 2,9 | Inférieur à 10 mg/dm³ |
| 50 | 86 | 2,6 | Inférieur à 10 mg/dm³ |
| 40 | 77 | 2,4 | Inférieur à 10 mg/dm³ |
| 30 | 72 | 2,3 | Inférieur à 10 mg/dm³ |
| 15 | 70 | 2,2 | Inférieur à 10 mg/dm³ |

Le taux de chlorure est faible et constant.

### Exemple 3

On opère comme à l'exemple 2 sauf que l'acide chlorofluorhydrique impur à valoriser issu d'une unité de fabrication 1,1,1,2-tétra-fluoro-éthane a la composition suivante :
HF 31,1% en poids analysé par dilution préalable puis dosage à l'électrode spécifique fluorure
HCl 0,4 % en poids analysé par dilution préalable puis dosage en chromatographie ionique
TFA 0,4 % en poids acide trifluoroacétique CF₃CO₂H, analysé par dilution préalable puis dosage par chromatographie ionique.
Eau 67,7% en poids, complément calculé par soustraction.
C₂H₂F₄ : 3850 mg/dm³ ou 0,4 % en poids.

On obtient un pied de distillation sous 50 mbar absolue à la température final de 86°C (359K) et après refroidissement et mise à pression atmosphérique avec les caractéristiques suivantes :
Densité 1,568 à 21°C
% poids en F = 49,9 %
% poids en B = 9,6 %
% BF₃ en masse avec B+F = 59,5%
Ratio molaire F/B = 3,0
Eau en % = 40,5%
Ratio H₂O/B = 2,6
Analyse des chlorures : inférieur à 10 milligrammes par dm³ de liquide en pied de distillation.
Teneur en acide trifluoroacétique mesurée par chromatographie ionique : inférieure à 250 mg/dm3 d'hydrate de BF₃ en pied de distillation, limite quantifiable.
C₂H₂F₄ : inférieur à 10 mg/dm³

### Exemple 4

On introduit 665 g d'acide fluorhydrique titrant 34,85% en HF et 0,35 % massique en HCl dans un réacteur de synthèse en verre pyrex contenant préalablement 300 g d'eau et dans lequel on a déjà mis 239 g d'acide borique H₃BO₃. La vitesse d'introduction du chlorofluorhydrique est de 2,66 g par minute. L'acide chlorofluorhydrique contient le Chlorodifluorométhane, CHF₂Cl : 1800 mg/dm³
Le réacteur de synthèse initialement à température ambiante vers 20 °C s'échauffe légèrement jusque vers 41°C. A la fin de la réaction stoechiométrique, les 1204 g de mélange fluoborés ont une concentration en BF₃ calculé de 21,5% massique. La solution qui était une suspension blanchâtre est devenue limpide, d'incolore à jaune pâle en fonction des traces de chlorures de fer présentes.

Dans un second réacteur, il est introduit en une seule fois 434 grammes d'une solution de BF₃,x H₂O obtenu, selon l'exemple 2. Le BF₃,x H₂O a les caractéristiques suivantes :
Densité 1,502 à 23°C permettant d'estimer environ 55,7% en BF₃ si le ratio F/B=3,00
% masse en F = 46,5 %
% masse en B = 8,6 %
% BF₃ en masse avec %B+%F = 55,1 %
Eau en % = 100- 55,1=44,9% %
Ratio H₂O/B = x= 3,1
Ratio molaire F/B = 3,07
Analyse des chlorures, teneur inférieure à 10 mg par dm³

Le contenu de ce second réacteur est chauffé à 60°C par double enveloppe et en même temps on établit un vide de 30 millibars, pression absolue mesurée par capteur de pression de précision. Le condenseur à eau froide de 1°C est mis en fonctionnement pour abattre le distillat. Un piège à carboglace de dioxyde de carbone solidifiera les traces d'eau échappant au condenseur.
La vitesse de réglage de la pompe péristaltique est mise sur 12 correspondant à un débit moyen d'environ 3,4 g par minute pour les 1005 g de mélange fluoborés à 21,5% qui sont injectés sur le pied de cuve de 434 g de BF₃,x H₂O. Sur les 1204 g seulement 1005 g de mélange fluoborés ont été injectés régulièrement en 297 minutes dans le deuxième réacteur pour réaliser une évaporation selon le procédé continu. Dans le même temps, il a été distillé régulièrement 545 g de distillat, distillat contrôlé en densité vers 1,022 à 23°C, liquide caractéristique d'une eau contenant de faibles quantités d'acide chlorhydrique. Le piège à carboglace contient après mise en température ambiante un liquide aqueux pesant 57 g. Il reste un peu d'eau sur les parois mouillées du condenseur et sur les parties froides de la verrerie de distillation. Il reste 99 g mélange fluoborés aqueux à 21,5% non utilisé dans le premier réacteur.

L'essai est arrêté, par mise sous pression atmosphérique d'azote et diminution vers l'ambiante de la température du pied de réacteur, de sorte à prélever du produit de pied de réacteur. Il est récupéré sur les spires du condenseur 2,1 g d'un produit blanc supposé être de l'acide borique. Le réacteur est propre et il contient 806,5 g d'hydrate de BF₃. Il est prélevé avec la pompe péristaltique 372 g de produit de pied de réacteur ayant les caractéristiques suivantes :
Densité 1,490 à 22,7°C permettant d'estimer un titre de 54,5% en BF₃ si le ratio F/B=3,00 % masse en F = 45,6 %
% masse en B = 8,6 %
% BF₃ en masse avec B+F = 54,2 %
Eau en % = 100- (B+F)% = 44,8 %
Ratio H₂O/B = 3,2
Ratio molaire F/B = 3,01
Analyse des chlorures, teneur de 35 mg par dm³.

Il reste 434 g de produit prêt, après remise du vide et augmentation de la température vers 60°C, pour poursuivre l'essai selon ce procédé en continu.

## Revendications

1. Procédé de valorisation d'acide chlorofluorhydrique comprenant (i) au moins une étape au cours de laquelle au moins un composé au bore choisi parmi l'acide borique (H₃BO₃), le métaborique (HBO₂) ou l'anhydride (B₂O₃) est mis en contact avec une solution aqueuse d'acide chlorofluorhydrique pour donner un mélange fluoborés et de l'acide chlorhydrique ; (ii) une étape de distillation pour donner d'une part de l'acide chlorhydrique et d'autre part un mélange comprenant de l'eau, de l'acide chlorhydrique résiduel et un mélange de fluoborés et (iii) une étape de distillation sous vide du mélange obtenu à l'étape (ii) mise en oeuvre à une pression absolue comprise entre 10 et 100 mbar pour éliminer l'acide chlorhydrique résiduel et l'eau et pour ainsi donner une solution aqueuse concentrée d'hydrates de trifluorure de bore, contenant moins de 100 mg de chlorure par kg d'hydrates de BF₃.

2. Procédé selon la revendication 1 **caractérisé en ce que** l'acide chlorofluorhydrique comprend de 0,005% à 38% en poids d'acide chlorhydrique, de 1 à 65% en poids d'acide fluorhydrique et de l'eau représentant le complément à 100%.

3. Procédé selon la revendication 1 ou 2 **caractérisé en ce que** la température de l'étape (i) est comprise entre 0 et 120°C.

4. Procédé selon l'une quelconque des revendications 1 à 3 **caractérisé en ce que** l'étape (ii) est comprise entre 25 et 120°C.

5. Procédé selon l'une quelconque des revendications 1 à 4 **caractérisé en ce que** les chlorures représentent entre 100 mg et 210 g de chlorures par Kg de mélange fluoborés.

6. Procédé selon l'une quelconque des revendications 1 à 5 **caractérisé en ce que** la température de l'étape de distillation sous vide est comprise entre 30 et 90°C, de préférence entre 60 et 90°C.

7. Procédé selon l'une quelconque des revendications précédentes **caractérisé en ce que** la pression absolue de l'étape de distillation sous vide est comprise entre 10 et 100 mbar.

8. Procédé de fabrication de trifluorure de bore gazeux **caractérisé en ce qu'**à l'issue de l'étape de distillation sous vide selon l'une quelconque des revendications précédentes la solution aqueuse d'hydrate de trifluorure de bore est soumis à un traitement avec de l'acide sulfurique concentré ou d'anhydride sulfurique ou avec de l'oléum.

9. Procédé selon la revendication 8 **caractérisé en ce que** la température de traitement est comprise entre 75 et 135°C.

10. Procédé selon l'une quelconque des revendications précédentes **caractérisé en ce qu'**il est mis en oeuvre en discontinu, semi-continu et continu.

## Patentansprüche

1. Verfahren zur Verwertung von Chlor-/Fluorwasserstoffsäure, umfassend (i) mindestens einen Schritt, bei dem mindestens eine Borverbindung, ausgewählt aus Borsäure (H₃BO₃), Metaborsäure (HBO₂) oder Borsäureanhydrid (B₂O₃), mit einer wässrigen Chlor-/Fluorwasserstoffsäure-Lösung in Kontakt gebracht wird, wobei ein Gemisch von Fluor-Bor-Verbindungen und Salzsäure erhalt wird; (ii) einen Destillationsschritt, der einerseits Salzsäure und andererseits ein Gemisch liefert, das Wasser, restliche Salzsäure und ein Gemisch von Fluor-Bor-Verbindungen umfasst, und (iii) einen Schritt der Vakuumdestillation des in Schritt (ii) erhaltenen Gemischs, der bei einem Absolutdruck zwischen 10 und 100 mbar durchgeführt wird, um die restliche Salzsäure und das Wasser zu entfernen und so eine konzentrierte wässrige Lösung von Bortrifluoridhydraten zu erhalten, die weniger als 100 mg Chlorid pro kg BF₃-Hydrate enthält.

2. Verfahren nach Anspruch 1, **dadurch gekennzeichnet, dass** die Chlor-/Fluorwasserstoffsäure 0,005 Gew.-% bis 38 Gew.-% Salzsäure, 1 bis 65 Gew.-% Fluorwasserstoffsäure und Wasser, das den Rest bis zu 100% ausmacht, umfasst.

3. Verfahren nach Anspruch 1 oder 2, **dadurch gekennzeichnet, dass** die Temperatur von Schritt (i) zwischen 0 und 120°C beträgt.

4. Verfahren nach einem der Ansprüche 1 bis 3, **dadurch gekennzeichnet, dass** Schritt (ii) zwischen 25 und 120°C liegt.

5. Verfahren nach einem der Ansprüche 1 bis 4, **dadurch gekennzeichnet, dass** die Chloride zwischen 100 mg und 210 g Chloride pro kg des Gemischs von Fluor-Bor-Verbindungen ausmachen.

6. Verfahren nach einem der Ansprüche 1 bis 5, **dadurch gekennzeichnet, dass** die Temperatur des Vakuumdestillationsschritts zwischen 30 und 90°C, vorzugsweise zwischen 60 und 90°C beträgt.

7. Verfahren nach einem der vorhergehenden Ansprüche, **dadurch gekennzeichnet, dass** der Absolutdruck des Vakuumdestillationsschritts zwischen 10 und 100 mbar liegt.

8. Verfahren zur Herstellung von gasförmigem Bortrifluorid, **dadurch gekennzeichnet, dass** nach dem Vakuumdestillationsschritt nach einem der vorhergehenden Ansprüche die wässrige Lösung von Bortrifluoridhydrat einer Behandlung mit konzentrierter Schwefelsäure oder Schwefelsäureanhydrid oder mit Oleum unterzogen wird.

9. Verfahren nach Anspruch 8, **dadurch gekennzeichnet, dass** die Behandlungstemperatur zwischen 75 und 135°C beträgt.

10. Verfahren nach einem der vorhergehenden Ansprüche, **dadurch gekennzeichnet, dass** es chargenweise, semikontinuierlich oder kontinuierlich durchgeführt wird.

## Claims

1. Process for upgrading hydrochlorofluoric acid comprising (i) at least one step during which at least one boron compound chosen from boric acid (H₃BO₃), metaboric acid (HBO₂) and boric anhydride (B₂O₃) is placed in contact with an aqueous solution of hydrochlorofluoric acid to give a mixture of fluoroboron compounds and of hydrochloric acid; (ii) a distillation step to give, on the one hand, hydrochloric acid and, on the other hand, a mixture comprising water, residual hydrochloric acid and a mixture of fluoroboron compounds, and (iii) a step of vacuum distillation of the mixture obtained in step (ii) performed at an absolute pressure of between 10 and 100 mbar to remove the residual hydrochloric acid and the water and to thus give a concentrated aqueous solution of boron trifluoride hydrates, containing less than 100 mg of chloride per kg of BF₃ hydrates.

2. Process according to Claim 1, **characterized in that** the hydrochlorofluoric acid comprises from 0.005% to 38% by weight of hydrochloric acid, from 1% to 65% by weight of hydrofluoric acid and water representing the remainder to 100%.

3. Process according to Claim 1 or 2, **characterized in that** the temperature of step (i) is between 0 and 120°C.

4. Process according to any one of Claims 1 to 3, **characterized in that** step (ii) is between 25 and 120°C.

5. Process according to any one of Claims 1 to 4, **characterized in that** the chlorides represent between 100 mg and 210 g of chlorides per kg of mixture of fluoroboron compounds.

6. Process according to any one of Claims 1 to 5, **characterized in that** the temperature of the vacuum distillation step is between 30 and 90°C and preferably between 60 and 90°C.

7. Process according to any one of the preceding claims, **characterized in that** the absolute pressure of the vacuum distillation step is between 10 and 100 mbar.

8. Process for manufacturing gaseous boron trifluoride, **characterized in that** after the vacuum distillation step according to any one of the preceding claims, the aqueous solution of boron trifluoride hydrate is subjected to a treatment with concentrated sulfuric acid or sulfuric anhydride or with oleum.

9. Process according to Claim 8, **characterized in that** the treatment temperature is between 75 and 135°C.

10. Process according to any one of the preceding claims, **characterized in that** it is performed in batch, semi-continuous or continuous mode.
